**Europäisches Patentamt**

**European Patent Office**

**Office européen des brevets**

(19)

(11) Veröffentlichungsnummer : **0 147 714**
**B1**

(12)        **EUROPÄISCHE PATENTSCHRIFT**

(45) Veröffentlichungstag der Patentschrift :
04.05.88

(51) Int. Cl.⁴ : **C 25 B 15/08, C 01 D 3/14**

(21) Anmeldenummer : **84115119.4**

(22) Anmeldetag : **10.12.84**

---

(54) Verfahren zur Entfernung von Sulfat aus Elektrolysesole.

---

(30) Priorität : **20.12.83 DE 3345898**

(43) Veröffentlichungstag der Anmeldung :
**10.07.85 Patentblatt 85/28**

(45) Bekanntmachung des Hinweises auf die Patenterteilung : **04.05.88 Patentblatt 88/18**

(84) Benannte Vertragsstaaten :
**BE DE FR GB IT NL SE**

(56) Entgegenhaltungen :
**EP-A- 0 093 319**
**DE-A- 3 037 818**
**FR-A- 2 529 232**
**US-A- 3 842 002**

(73) Patentinhaber : **BAYER AG**
**Konzernverwaltung RP Patentabteilung**
**D-5090 Leverkusen 1 Bayerwerk (DE)**

(72) Erfinder : **Minz, Franz-Rudolf, Dr.**
**Hans-Sachs-Strasse 14**
**D-4047 Dormagen (DE)**
Erfinder : **Vajna, Sandor, Dr.**
**Sigmund-Freud-Strasse 18**
**D-5300 Bonn 1 (DE)**

**Beschreibung**

Bei der elektrolytischen Herstellung von Chlor, Alkalihydroxidlauge und Wasserstoff aus Alkalichlorid werden natürlich vorkommende Salze eingesetzt, die eine Entfernung der begleitenden Verunreinigungen erforderlich machen. So müssen z. B. bei Einsatz von Steinsalz in einer Elektrolyse mit geschlossenem Solekreislauf die im Salz vorhandenen mehrwertigen Kationen durch alkalische bzw. Carbonat-Fällung und die Sulfationen durch Fällung z. B. mit Barium oder Kalzium entfernt werden. Bezüglich Einzelheiten des Elektrolyseverfahrens und der Solereinigung wird auf die Veröffentlichung von Hund & Minz « Chlor, Alkalien und anorganische Chlorverbindungen » in Winnacker, Küchler « Chemische Technologie », Band 2 « Anorgische Technologie I », Seite 379-424, insbesondere Seite 421-424, so wie die dort zitierte Sekundärliteratur, verwiesen.

Die vorliegende Erfindung betrifft nun speziell ein Verfahren zur Entfernung von Sulfationen aus einer Alkalichloridsole beim Membranelektrolyseverfahren mittels Ionenaustauscher.

Auch selektiv arbeitende Ionenaustauscher sind nicht in der Lage, Sulfationen aus einer konzentrierten Alkalichloridlösung aufzunehmen. Auch die aus der Elektrolysezelle ablaufende sog. Dünnsole enthälte mit ca. 200 g Alkalichlorid pro Liter noch eine zu hohe Alkalichloridkonzentration, um einen befriedigenden Ionenaustauschereffekt zu erzielen. Im Gegenteil sind hoch konzentrierte Alkalichloridlösungen geeignet, um aus einem mit Sulfationen beladenen Ionenaustauscher Sulfationen aufzunehmen.

Bei der Elektrolyse nach dem Membranverfahren ist der Solekreislauf in Bezug auf Wasser nicht völlig geschlossen : Auf ihrem Weg durch die Membran schleusen die Natriumionen Wasser in Form einer Hydrathülle aus dem Anodenraum aus. Diese und die als Wasserdampf mit dem gasförmigen Chlor aus der Zelle ausgetragene Wassermenge muß dem Kreislauf zur Volumenkonstanthaltung wieder zugeführt werden.

Es hat sich nun gezeigt, daß man einen Teilstrom des Solestrom, der die Elektrolysezelle verläßt, mit der für den Gesamtkreislauf notwendigen Wassermenge soweit verdünnen kann, daß ein schwach basischer Ionenaustauscher die gesamte, mit dem Salz in den Kreislauf eingetragenen Sulfatmenge zu entfernen vermag.

Gegenstand der vorliegenden Erfindung ist ein Verfahren zur Entfernung von Sulfat aus dem Solekreislauf beim Alkalichlorid-Membran-Elektrolyseverfahren, das dadurch gekennzeichnet ist, daß ein Teilstrom der im Kreislauf geführten Sole auf eine Alkalichloridkonzentration von weniger als 150 g/l, vorzugsweise auf 90 bis 120 g/l verdünnt wird, die verdünnte Sole zur Entfernung des Sulfats über einen schwach sauren Ionenaustauscher geleitet wird, und danach in den Kreislauf zurückgeführt wird, daß der Ionenaustauscher nach Beladung mit Sulfationen durch Kontaktierung mit Alkalichloridlösung mit einer Konzentration von über 280 g/l regeneriert wird und aus der Regenerationslösung durch Kühlungskristallisation Alkalisulfat und/oder durch Zugabe von $Ca^{++}$-Ionen (z. B. in Form von $CaCl_2$ oder $CaCo_3$) Glauberit oder Gips ausgefällt wird.

Als Ionenaustauscher sind schwach basische Anionenaustauscher auf Styrol- oder Acrylatbasis geeignet. Solche Ionenaustauscher sind z. B. in Ullmanns Enzyklopädie der technischen Chemie, Band 13, Seite 279-346, insbesondere Seite 295-308, beschrieben. Der Ionenaustauscher wird vorzugsweise in Kugel- oder Granulatform in einer Ionenaustauschersäule eingesetzt. Die Größe der Granulatteilchen kann 0,5 bis 5 mm Durchmesser, vorzugsweise ca. 1 bis 2 mm Durchmesser, betragen. Die Packungshöhe des Ionenaustauschers in Strömungsrichtung kann etwa 1 bis 2 m betragen. Die Kontaktzeit der verdünnten Sole mit dem Ionenaustauscher wird so gewählt, daß stündlich das 5- bis 20-fache, vorzugsweise etwa 10-fache, Volumen an Sole, bezogen auf das Volumen der Ionenaustauschersäule mit dem Ionenaustauscher kontaktiert wird.

Die Sole soll einen pH-Wert zwischen 2 und 4, vorzugsweise etwa 3 aufweisen. Vorzugsweise erfolgt die Einstellung des pH-Wertes durch Zugabe von Salzsäure.

Die verdünnte, den Ionenaustauscher verlassende, im wesentlichen sulfatfreie Sole wird dem Solekreislauf wieder zugespeist. Die Sole wird dann durch Auflösen von festem Salz wieder aufkonzentriert und dem üblichen Reinigungsverfahren zur Entfernung von mehrwertigen Kationen unterzogen.

Wenn der Ionenaustauscher mit Sulfationen beladen ist, d. h. wenn der Sulfatgehalt der aus dem Ionenaustauscher abfließenden verdünnten Sole zu steigen beginnt (Sulfationen « durchbrechen »), wird die Zufuhr der verdünnten Sole unterbrochen und der Ionenaustauscher regeneriert. Hierzu wird Alkalichloridlösung mit einer Konzentration von mehr als 280 g/l, vorzugsweise mehr als 300 g/l Alkalichlorid über den Ionenaustauscher geführt. Die hochkonzentrierte Lösung nimmt Sulfationen aus dem Ionenaustauscher auf. Das abfließende Regenerat enthält am Anfang mehr als 20 g Natriumsulfat pro Liter. Wenn der Alkalisulfatgehalt auf einen Wert zwischen 12 und 16 g/l abgesunken ist, kann der Ionenaustauscher erneut zur Entfernung von Sulfationen aus verdünnter Alkalichloridsole eingesetzt werden.

Das Regenerat enthält einen mittleren Alkalisulfatgehalt von 15 bis 18 g Alkalisulfat pro Liter. Dieses Regenerat wird vorzugsweise einem Kühlungskristallisator zugeführt, wo sie auf Temperaturen von z. B. —5 bis —10° abgekühlt wird.

Dabei kristallisiert Alkalisulfat aus. Zum Beispiel beträgt die Löslichkeit von Natriumsulfat in einer Natriumchloridlösung mit einem Gehalt von 240 g Natriumchlorid pro Liter bei —10° nur noch 5 g/l, bei —5° etwa 9 g/l. Aus einer solchen Lösung kristallisiert $Na_2SO_4 \cdot 10\ H_2O$ in verkaufsfähiger

Form aus. Aus der abgekühlten Regenerationslösung werden die Alkalisulfathydratkristalle abgetrennt. Die Mutterlauge kann entweder wieder aufgestärkt werden und zur erneuten Regeneration des Ionenaustauschers rezirkuliert werden, oder dem Solekreislauf zugeführt werden. Das erfindungsgemäße Verfahren wird an Hand der anliegenden Figuren näher erläutert:

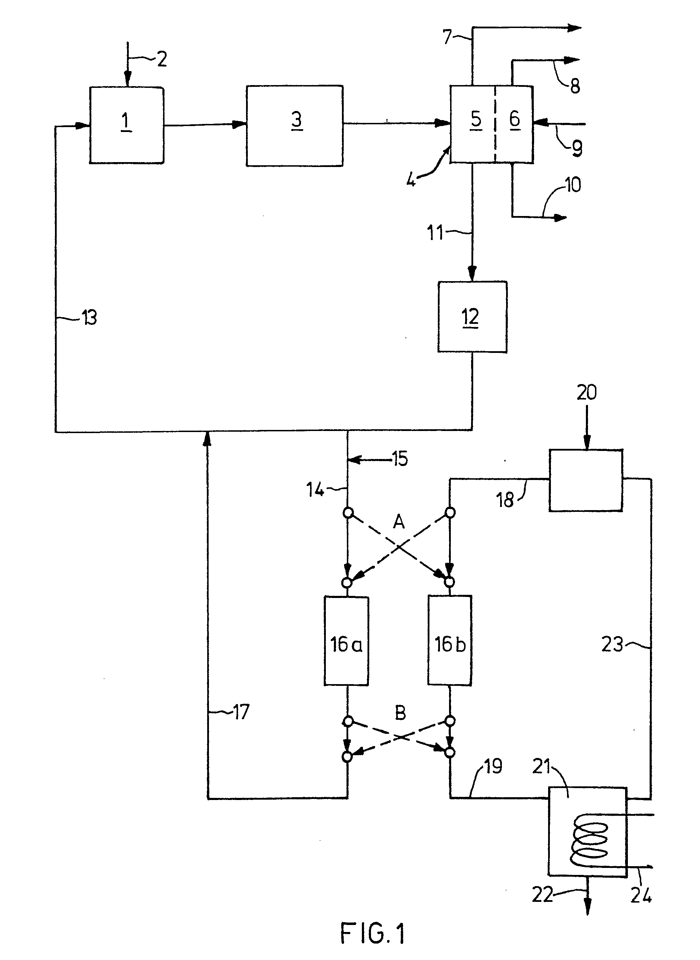

Fig. 1 zeigt ein Flußschema für das erfindungsgemäße Verfahren. Einer Salzlösestation 1 wird über Leitung 13 rezirkulierte Sole und natürliches Salz 2 zugeführt. Es wird z. B. eine Natriumchloridsole mit einem Natriumchloridgehalt von 300 g/l und einem Gehalt von 5 g/l Natriumsulfat erhalten. Diese aufgestärkte Sole wird einer Reinigung 3 zur Entfernung mehrwertiger Ionen wie Kalzium, Magnesium und anderen Verunreinigungen zugeführt. Die gereinigte Sole wird dem Anodenraum 5 einer Membranelektrolysezelle 4 zugeführt. Durch Leitung 11 wird eine verarmte Sole abgeführt. Pro m³ zugeführter Sole entstehen beispielsweise 0,68 m³ verarmte Sole mit 200 g Natriumchlorid pro Liter und 7,3 g Natriumsulfat pro Liter. Ferner entsteht im Anodenraum das Elektrolyseprodukt Chlor 7. In dem vom Anodenraum 5 durch einen Membran getrennten Kationenraum 6 entstehen die Elektrolyseprodukte Natriumhydroxid 10 und Wasserstoff 8. Zur Aufrechterhaltung eines für die Membran tolerierbaren Natriumhydroxidgehaltes im Kathodenraum 6 wird Wasser 9 zugespeist.

Die durch 11 abfließende Sole wird einer Entchlorung 12 unter Ansäuerung durch Zugabe von Salzsäure unterzogen und über Leitung 13 zur Salzlösestation zurückgeführt. Entsprechend den beispielhaften Angaben sind demnach pro m³ der Elektrolysezelle zugeführter Sole 164 kg Natriumchlorid und 255 l Wasser zu ersetzen. Durch Auflösung von Salz mit einem Gehalt von beispielsweise 1 Gew.-% Sulfat, gerechnet als Natriumsulfat, werden pro m³ der Elektrolyse zugeführter Sole 1,66 kg Natriumsulfat in die im Kreislauf geführte Sole eingeschleppt. Zur Entfernung dieses eingeschleppten Sulfates wird nun ein Teilstrom von 0,23 m³ der verarmten Sole (bezogen auf jeweils 1 m³ der Elektrolysezelle zugeführter Sole) über Leitung 14 abgezweigt. Die verarmte Sole wird durch Zugabe von Wasser über Leitung 15 auf eine Konzentration von 100 g Natriumchlorid pro Liter verdünnt. Nach Überleiten über den Ionenaustauscher 16a wird über Leitung 17 eine im wesentlichen sulfatfreie (Gehalt weniger 0,1 g/l) Natriumchloridlösung wieder in den Solehauptstrom zurückgeführt.

Um einen kontinuierlichen Betrieb zu gewährleisten, werden vorzugsweise mindestens zwei Ionenaustauschersäulen 16a und 16b vorgesehen, wobei diese abwechselnd zur Sulfatentfernung und zur Regeneration eingesetzt werden. Über Ventile A und B kann die Betriebsweise der Ionenaustauschersäulen 16a und 16b vertauscht werden. Während demgemäß Ionenaustauscher 16a zur Sulfatentfernung betrieben wird, wird Ionenaustauschersäule 16b regeneriert. Hierzu wird über Leitung 18 eine Natriumchloridlösung mit z. B. 300 g Natriumchlorid pro Liter zugeführt. Die aus der Ionenaustauschersäule austretende Regenerationslösung weist am Anfang einen Sulfatgehalt von mehr als 20 g/l auf. Die Zufuhr von Regenerationslösung wird unterbrochen, wenn der Sulfatgehalt auf einen Wert von 12 bis 16 g/l abgesunken ist. Der Ionenaustauscher kann dann erneut zur Sulfatentfernung eingesetzt werden.

Das ablaufende Regenerat mit beispielsweise einem mittleren Gehalt von 18 g Natriumsulfat pro Liter wird einem Kühlungskristallisator 21 zugeführt. Dabei kristallisiert Natriumsulfatdekahydrat ($Na_2SO_4 \times 10\ H_2O$) aus, das abfiltriert und ausgeschleust (22) wird. Die Mutterlauge weist bei Abkühlung auf z. B. — 10° noch 5 g Natriumsulfat pro Liter auf. Sie kann über Leitung 23 zurückgeführt und wieder aufkonzentriert werden, wobei Natriumchlorid (20) aufgelöst wird. Für die oben gegebenen beispielhaften Mengen und Konzentrationsangaben werden beispielsweise 0,128 m³ Regenerationslösung mit einer Konzentration von 300 g Natriumchlorid pro Liter und 5 g Natriumsulfat pro Liter über Leitung 18 dem Ionenaustauscher 16b zugeführt. Das ablaufende Regenerat weist dann einen Gehalt von ca. 280 g/l Natriumchlorid und 18 g/l Natriumsulfat auf. Im Kühlungskristallisator werden 3,76 kg $Na_2SO_4 \times 10\ H_2O$, entsprechend einer Auschleusung von 1,66 kg $Na_2SO_4$, bei Abkühlung auf — 10 °C gewonnen.

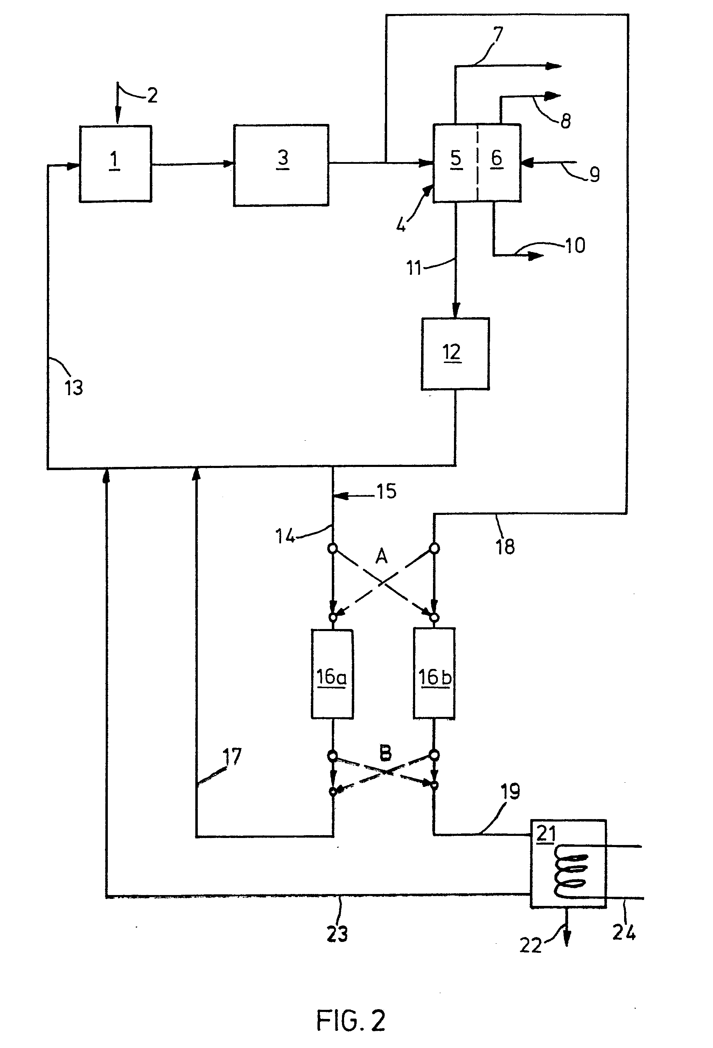

Figur 2 zeigt eine alternative Ausführungsform des erfindungsgemäßen Verfahrens, bei dem die Regenerationslösung nicht in einem separaten Kreislauf geführt wird, sondern zur Regeneration jeweils aufgestärkte und gereinigte Natriumchloridsole über Leitung 18 nach der Solereinigung 3 entnommen wird und die im Anschluß an die Kühlungskristallisation gewonnene Mutterlauge über Leitung 23 dem Solekreislauf wieder zugeführt wird.

**Patentansprüche**

1. Verfahren zur Entfernung von Sulfat aus dem Solekreislauf beim Alkalichlorid-Membran-Elektrolyseverfahren, dadurch gekennzeichnet, daß ein Teilstrom der im Kreislauf geführten Sole auf eine Alkalichloridkonzentration von weniger als 150 g/l verdünnt wird, die verdünnte Sole zur Entfernung des Sulfats über einen schwach basischen Anionenaustauscher geleitet und danach in den Kreislauf zurückgeführt wird, daß der Ionenaustauscher nach Beladung mit Sulfationen durch Kontaktierung mit Alkalichloridlösung mit einer Konzentration von mindestens 280 g/l regeneriert wird und aus dem erhaltenen Regenerat Sulfat ausgefällt wird.

2. Verfahren nach Anspruch 1, dadurch gekennzeichnet, daß die dem Ionenaustauscher zugeführte verdünnte Alkalichloridlösung einen pH-Wert zwischen 2 und 4 aufweist.

3. Verfahren nach einem der Ansprüche 1 oder 2, dadurch gekennzeichnet, daß die Regenerationslösung einen pH-Wert von 2 bis 4 aufweist.

4. Verfahren nach einem der Ansprüche 1 bis 3, dadurch gekennzeichnet, daß aus dem Regenerat Natriumsulfat durch Kühlungskristallisation ausgefällt wird.

5. Verfahren nach einem der Ansprüche 1 bis 3, dadurch gekennzeichnet, daß die Ausfällung des Sulfats aus dem Regenerat durch Zugabe von Ca$^{++}$-Ionen erfolgt.

6. Verfahren nach einem der Ansprüche 1 bis 3, dadurch gekennzeichnet, daß die der Elektrolysezelle zugeführte Sole, die dem Ionenaustauscher zugeführte Regenerationslösung und die nach der Kühlungskristallisation gewonnene Mutterlauge jeweils einen Sulfatgehalt von 4 bis 8 g/l Alkalisulfat aufweisen.

## Claims

1. Process for the removal of sulphate from the brine circulation in the alkali metal chloride-membrane electrolysis process, characterised in that a partial stream of the brine carried in the circulation is diluted to an alkali metal chloride concentration of less than 150 g/l, and the diluted brine is passed over a weakly basic anion exchanger for removal of the sulphate and is then returned to the circulation, and in that the ion exchanger, after being charged with sulphate ions, is regenerated by contact with an alkali metal chloride solution having a concentration of at least 280 g/l and sulphate is precipitated from the resulting regeneration discharge.

2. Process according to claim 1, characterised in that the diluted alkali metal chloride solution conveyed to the ion exchanger has a pH of from 2 to 4.

3. Process according to one of the claims 1 or 2, characterised in that the regenerating solution has a pH of from 2 to 4.

4. Process according to one of the claims 1 to 3, characterised in that sodium sulphate is precipitated from the regeneration discharge by crystallisation by cooling.

5. Process according to one of the claims 1 to 3, characterised in that precipitation of the sulphate from the regeneration discharge is brought about by the addition of Ca$^{++}$ ions.

6. Process according to one of the claims 1 to 3, characterised in that the brine carried to the electrolytic cell, the regenerating solution carried to the ion exchanger and the mother liquor obtained after crystallisation by cooling all have a sulphate content of from 4 to 8 g/l of alkali metal sulphate.

## Revendications

1. Procédé d'élimination du sulfate à partir du circuit de saumure dans le procédé d'électrolyse à membrane d'un chlorure alcalin, caractérisé en ce qu'un courant partiel de la saumure parcourant un circuit est diluée à une concentration en chlorure alcalin inférieure à 150 g/litre, en ce que la saumure diluée pour l'élimination du sulfate passe par un échangeur d'ions faiblement basique et est ensuite renvoyée au circuit, en ce que l'échangeur d'ions après chargement en ions sulfate est régénéré par mise en contact avec une solution de chlorure alcalin ayant une concentration d'au moins 280 g/litre et en ce qu'à partir du régénérat obtenu on précipite le sulfate.

2. Procédé selon la revendication 1, caractérisé en ce que la solution de chlorure alcalin diluée envoyée à l'échangeur d'ions présente une valeur de pH comprise entre 2 et 4.

3. Procédé selon les revendications 1 ou 2, caractérisé en ce que la solution de régénération présente une valeur de pH comprise entre 2 et 4.

4. Procédé selon l'une des revendications 1 à 3, caractérisé en ce qu'on précipite à partir du régénérat le sulfate de sodium par cristallisation avec refroidissement.

5. Procédé selon les revendications 1 à 3, caractérisé en ce que la précipitation du sulfate à partir du régénérat se fait par l'addition d'ions Ca$^{++}$.

6. Procédé selon l'une des revendications 1 à 3, caractérisé en ce que la saumure envoyée à la cellule d'électrolyse, la solution de régénération envoyée à l'échangeur d'ions et la liqueur-mère récupérée après la cristallisation avec refroidissement, présentent chacune une teneur en sulfate de 4 à 8 g/litre de sulfate alcalin.

FIG. 1

FIG. 2